# EUROPÄISCHE PATENTANMELDUNG

(11) **EP 1 496 307 A2**
(43) Veröffentlichungstag der Anmeldung: **12.01.2005**
(21) Anmeldenummer: 03400040.6
(22) Anmeldetag: 23.07.2003
(51) Int. Cl.: F21V 11/02, F21V 8/00, F21S 9/02

(54) **Elektrische Leuchte**

(30) Priorität: 11.07.2003 DE 20310704 U
(71) Anmelder: AVS Geschäftsführungs- und Beteiligungs GmbH, 41352 Korschenbroich (DE)
(72) Erfinder: Schlüter, Henning, 50968 Köln (DE)
(74) Vertreter: Köchling, Conrad-Joachim, Dipl.-Ing.

(57) **Zusammenfassung**

Um eine Elektrische Leuchte mit mindestens einer Lichtquelle (1), einem Reflektor (2) und in den Reflektor (2) eingesetzten Blendlamellen (4), wobei jede Blendlamelle (4) durch einen im Querschnitt etwa dreieckigen Hohlkörper mit gegebenenfalls konkav gewölbten Seitenflächen gebildet ist, dessen Dreiecksspitze eine im Lichtaustrittsbereich (3) liegende Querkante (5) bildet, zu schaffen, bei der mit geringem Aufwand ein zusätzlicher Aufmerksamkeitsfaktor oder eine zusätzliche Aufmerksamkeitsfunktion erreicht werden kann, wird vorgeschlagen, dass die Querkante (5) mindestens über einen Teil ihres Verlaufes einen Schlitz (6), einen lichtdurchlässigen Bereich oder einen farbigen, gegenüber der Farbe der Lamelle sich abhebenden Bereich aufweist.

## Beschreibung

Die Erfindung betrifft eine Elektrische Leuchte mit mindestens einer Lichtquelle, einem Reflektor und in den Reflektor eingesetzten Blendlamellen, wobei jede Blendlamelle durch einen im Querschnitt etwa dreieckigen Hohlkörper mit gegebenenfalls konkav gewölbten Seitenflächen gebildet ist, dessen Dreiecksspitze eine im Lichtaustrittsbereich liegende Querkante bildet.

Derartige Leuchten sind im Stand der Technik vielfach bekannt. Häufig handelt es sich um bei solchen Leuchten um Langfeldleuchten, die zur Ausleuchtung von Arbeitsplätzen, Gängen oder anderen Gebäudeteilen dienen. Solche Leuchten haben im Regelfall einen Hauptreflektor, der das von der Lichtquelle, beispielsweise einer Langfeldleuchte oder auch einer punktuellen Lichtquelle, ausgehende Licht aus der Lichtabgabeöffnung der Leuchte abstrahlt. Zur Vergleichmäßigung der Lichtabstrahlung und zur Verbesserung der Lichtausbeute sind dabei häufig noch Blendlamellen eingesetzt, die ebenso wie die Reflektoren hochglänzende Oberflächen haben.

Ausgehend von diesem Stand der Technik liegt der Erfindung die Aufgabe zugrunde, eine elektrische Leuchte gattungsgemäßer Art zu schaffen, bei der mit geringem Aufwand ein zusätzlicher Aufmerksamkeitsfaktor oder eine zusätzliche Aufmerksamkeitsfunktion erreicht werden kann.

Zur Lösung dieser Aufgabe wird vorgeschlagen, dass die Querkante mindestens über einen Teil ihres Verlaufes einen Schlitz, einen lichtdurchlässigen Bereich oder einen farbigen, gegenüber der Farbe der Lamelle sich abhebenden Bereich aufweist.

Erfindungsgemäß hat vorzugsweise die durch die Dreiecksspitze gebildete Querkante jeder Blendlamelle eine schlitzartige Ausnehmung oder einen lichtdurchlässigen Bereich oder einen farbig gegenüber der Oberfläche der Blendlamelle abgesetzten Bereich. Durch diese Ausbildung wird erreicht, dass beispielsweise aus dem zusätzlichen Schlitz Licht austreten kann, welches von der Hauptlichtquelle oder von dem Hauptreflektor abgestrahlt wird, so dass an der Querkante der Blendlamelle ein zusätzlicher Lichtpunkt oder dergleichen als zusätzlicher Aufmerksamkeitsbereich erzeugt wird. Durch eine solche Ausbildung kann beispielsweise eine Wegmarkierung erfolgen, indem beispielsweise alle Leuchten, die zu einer bestimmten Position im Gebäude führen, mit gleichartigen Schlitzen oder entsprechenden Bereichen ausgestattet sind, so dass für den Benutzer eine Hilfestellung bezüglich des zu gehenden Weges erzeugt ist. Auch andere Funktionen können über diese optisch erkennbare Kennzeichnung erfüllt werden.

Eine bevorzugte Ausbildung kann dabei in der Weise vorgesehen sein, dass der Schlitz der Querkante der Lamelle offen ausgebildet ist.

Diese Ausbildung ist besonders einfach, weil lediglich der Schlitz als offenes Element auszubilden ist, ohne dass weitere Teile eingesetzt werden müssen oder bearbeitet werden müssen.

Vorzugsweise ist dabei vorgesehen, dass in den Schlitz ein lichtdurchlässiges, lichtdurchscheinendes, farbiges, lichtleitendes und/oder lichtsammelndes Formteil eingesetzt ist.

Durch diese Anordnung ist es möglich, unterschiedliche Funktionen durch unterschiedliche Farbgebung oder unterschiedliche Helligkeit darzustellen.

Bevorzugt ist dabei vorgesehen, dass das Formteil die Außenkontur der Lamelle im Schlitzbereich nicht überragt.

Um das Formteil kostengünstig und dennoch sicher an der Blendlamelle fixieren zu können, ist vorgesehen, dass das Formteil formschlüssig und/oder kraftschlüssig zwischen den Seitenflächen der Lamelle fixiert ist.

Besonders bevorzugt ist vorgesehen, dass der Schlitz oder das den Schlitz ausfüllende Formteil von der Lichtquelle der Leuchte durchstrahlt oder angestrahlt ist.

Eine unter Umständen bevorzugte Variante wird darin gesehen, dass im Hohlraum der Lamelle eine separate elektrische Lichtquelle angeordnet ist, die den Schlitz oder das Formteil durchstrahlt oder anstrahlt.

Hierdurch ist es möglich, den Schlitz oder das Formteil mit einer separaten Lichtquelle anzustrahlen oder zu durchstrahlen, so dass unterschiedliche Helligkeit und/oder Farbgebung durch entsprechend farbiges Licht und damit eine entsprechende Funktion durch die Leuchte ausgeführt werden kann.

Bevorzugt ist dabei vorgesehen, dass die separate Lichtquelle eine Leuchtdiode ist.

Um eine solche Leuchte beispielsweise auch als Notbeleuchtung bei Stromausfall nutzen zu können, ist vorgesehen, dass die separate Lichtquelle von einer netzunabhängigen Stromquelle, z.B. einem Akkumulator oder einer Batterie, gespeist ist.

Ausführungsbeispiele der Erfindung sind in der Zeichnung dargestellt und im Folgenden näher beschrieben.

Es zeigt:
- Figur 1: eine erste Ausführungsform im Querschnitt gesehen;
- Figur 2: die Ausführungsform der Leuchte in Seitenansicht gesehen;
- Figur 3: ein in die Leuchte gemäß Figur 1 und 2 eingesetztes Formteil in Seitenansicht und Stirnansicht;
- Figur 4: das Formteil in Stirnansicht in erheblich vergrößertem Maßstab;
- Figur 5: eine zweite Ausführungsform in der Ansicht gemäß Figur 1;
- Figur 6: die zweite Ausführungsform in der Ansicht gemäß Figur 2 gesehen;
- Figur 7: das Formteil der Ausführungsform nach Figur 5 und 6 in Seitenansicht und in Stirnansicht in Einzeldarstellung.

In den Zeichnungen ist eine elektrische Leuchte mit einer Lichtquelle 1 gezeigt, wobei die Leuchte als Langfeldleuchte ausgebildet ist und seitlich zwei Reflektoren 2 aufweist, mittels derer das von der Lichtquelle 1 abgestrahlte Licht aus der Öffnung der Leuchte nach unten in Richtung des Pfeiles 3 abstrahlt. Zusätzlich ist zwischen die Reflektoren 2 eine Anzahl von Blendlamellen 4 eingesetzt, um eine Vergleichmäßigung des Lichtaustritts und einen zusätzlichen Lichtgewinn zu erreichen.

Jede Blendlamelle 4 ist durch einen im Querschnitt etwa dreieckigen Hohlkörper gebildet, dessen Seitenflächen konkav gewölbt sind und dessen Dreiecksspitze eine im Lichtaustrittsbereich liegende Querkante 5 bildet.

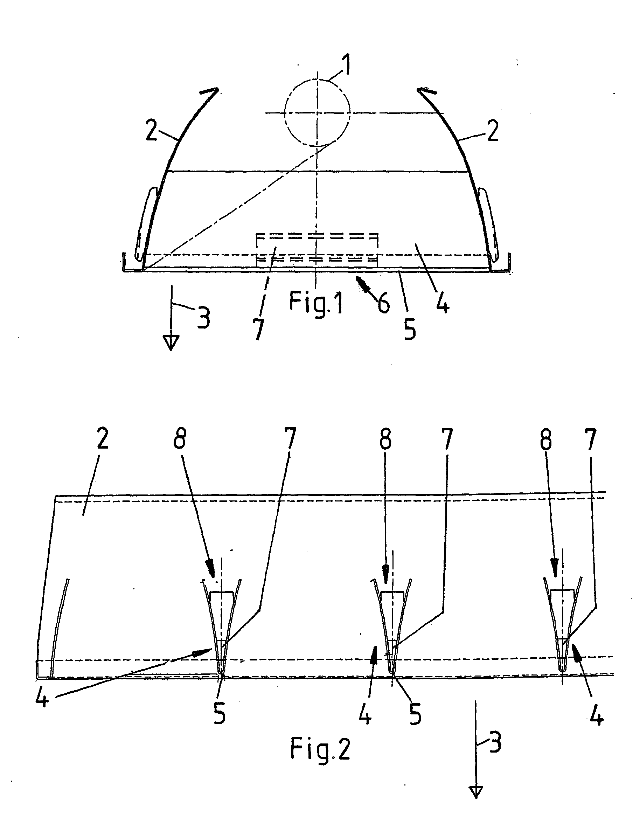

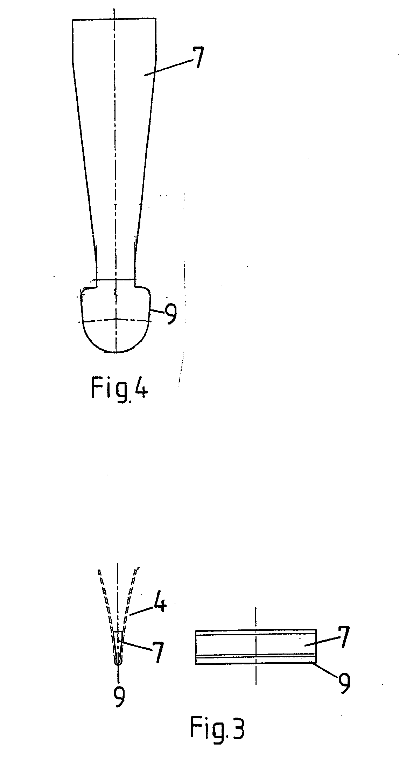

Die Querkante 5 weist jeweils mindestens über einen Teil ihres Längsverlaufes einen Schlitz 6 auf, in den ein Formteil 7 eingesetzt ist, welches den Schlitz an seiner Mündung ausfüllt. Das Formteil 7 besteht aus lichtdurchlässigem oder lichtdurchscheinendem Material, beispielsweise Polycarbonat oder PMMA. Gegebenenfalls kann das Formteil 7 auch aus farbigem lichtdurchlässigem Werkstoff bestehen. Das Formteil 7 ist formschlüssig und/oder kraftschlüssig zwischen den Seitenflächen der Lamelle 4 fixiert, so dass es lagegesichert gehalten ist und nicht verloren gehen kann. Im Ausführungsbeispiel wird das den Schlitz 6 ausfüllende Formteil 7 von der Rückseite der Leuchte her durch die Lichtquelle 1 der Leuchte durchstrahlt, weil die Blendlamellen 4 zur Lichtquelle 1 hin offen ausgebildet sind, wie bei 8 angedeutet. Bei der Ausführungsform nach Figur 1 bis Figur 4 ist das Formteil der Innenform der Blendlamelle 4 in seiner Kontur angepasst, wobei das Formteil an seinem den Schlitz 6 ausfüllenden Endbereich kopfartig vergrößert ist. Der Schlitz 6 kann entsprechend groß bemessen sein, so dass die gesamte Fläche des Kopfes 9 von der entsprechenden Lichtquelle erhellt wird und somit einen deutlich erkennbaren Bereich an der Spitze der Lamellen 4 darstellt.

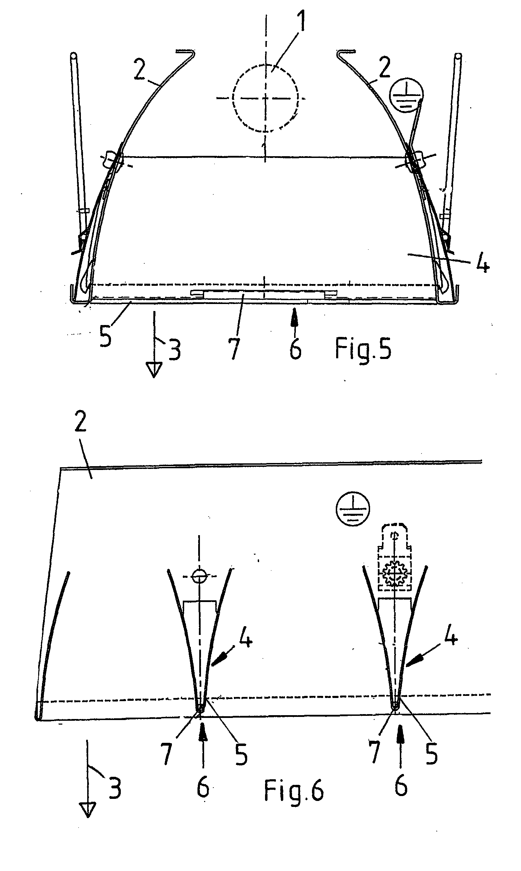

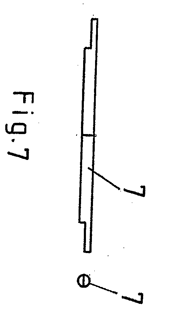

Bei der Ausführungsform nach Figur 5 bis 7 ist das Formteil 7 als runder Stababschnitt ausgebildet, der an seinen beiden Enden nur als halbkreisförmiges Element ausgebildet ist. Das Formteil kann in einen entsprechenden Schlitz eingesetzt werden, so dass der Mittelbereich im Bereich des Schlitzes 6 liegt und von der Lichtquelle 1 erhellt wird, während die verjüngten Enden des Formteiles 7 zur Halterung und Fixierung in der Lamelle 4 dienen, also in dem nicht geschlitzten Bereich der Randkante 5 der Lamelle angeordnet sind.

Das Formteil 7 kann beispielsweise aus Polycarbonat oder aus PMMA bestehen. Vorzugsweise ist das Formteil 7 aus lichtdurchlässigem Werkstoff gefertigt, beispielsweise auch aus lichtsammelndem oder lichtleitendem Kunststoff. Durch die erfindungsgemäße Anordnung wir die Lichtausbeute und die gute Ausleuchtung mittels der Leuchte noch verbessert, wobei ein zusätzlicher Aufmerksamkeitsbereich durch den Lichtaustritt im Bereich des Schlitzes bzw. im Bereich des den Schlitz ausfüllenden Formteiles erreicht ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Elektrische Leuchte mit mindestens einer Lichtquelle (1), einem Reflektor (2) und in den Reflektor (2) eingesetzten Blendlamellen (4), wobei jede Blendlamelle (4) durch einen im Querschnitt etwa dreieckigen Hohlkörper mit gegebenenfalls konkav gewölbten Seitenflächen gebildet ist, dessen Dreiecksspitze eine im Lichtaustrittsbereich (3) liegende Querkante (5) bildet, **dadurch gekennzeichnet, dass** die Querkante (5) mindestens über einen Teil ihres Verlaufes einen Schlitz (6), einen lichtdurchlässigen Bereich oder einen farbigen, gegenüber der Farbe der Lamelle sich abhebenden Bereich aufweist.

2. Leuchte nach Anspruch 1, **dadurch gekennzeichnet, dass** der Schlitz (6) der Querkante (5) der Lamelle (4) offen ausgebildet ist.

3. Leuchte nach Anspruch 1, **dadurch gekennzeichnet, dass** in den Schlitz (6) ein lichtdurchlässiges, lichtdurchscheinendes, farbiges, lichtleitendes und/oder lichtsammelndes Formteil (7) eingesetzt ist.

4. Leuchte nach Anspruch 3, **dadurch gekennzeichnet, dass** das Formteil (7) die Außenkontur der Lamelle (4) im Schlitzbereich nicht überragt.

5. Leuchte nach einem der Ansprüche 3 oder 4, **dadurch gekennzeichnet, dass** das Formteil (7) formschlüssig und/oder kraftschlüssig zwischen den Seitenflächen der Lamelle (4) fixiert ist.

6. Leuchte nach einem der Ansprüche 1 bis 5, **dadurch gekennzeichnet, dass** der Schlitz (6) oder das den Schlitz (6) ausfüllende Formteil (7) von der Lichtquelle (1) der Leuchte durchstrahlt oder angestrahlt ist.

7. Leuchte nach einem der Ansprüche 1 bis 5, **dadurch gekennzeichnet, dass** im Hohlraum der Lamelle (4) eine separate elektrische Lichtquelle angeordnet ist, die den Schlitz (6) oder das Formteil (7) durchstrahlt oder anstrahlt.

8. Leuchte nach Anspruch 7, **dadurch gekennzeichnet, dass** die separate Lichtquelle eine Leuchtdiode ist.

9. Leuchte nach einem der Ansprüche 7 oder 8, **dadurch gekennzeichnet, dass** die separate Lichtquelle von einer netzunabhängigen Stromquelle, z.B. einem Akkumulator oder einer Batterie, gespeist ist.
